# EUROPÄISCHE PATENTSCHRIFT

(11) **EP 1 580 471 B1**
(45) Veröffentlichungstag und Bekanntmachung des Hinweises auf die Patenterteilung: **23.05.2012**
(21) Anmeldenummer: 05450048.3
(22) Anmeldetag: 15.03.2005
(51) Int. Cl.: F16L 5/06

(54) **Dichtvorrichtung**
Seal arrangement
Dispositif d'étanchéité

(30) Priorität: 25.03.2004 AT 5322004
(43) Veröffentlichungstag der Anmeldung: 28.09.2005
(73) Patentinhaber: HL Hutterer & Lechner GmbH, 2325 Himberg bei Wien (AT)
(72) Erfinder: Rittmann, Anton, 2320 Rauchenwarth 36 (AT)
(74) Vertreter: Schwarz & Partner

(56) Entgegenhaltungen:
- EP-A- 0 161 557
- EP-A- 0 309 836
- DE-A1- 4 131 637
- DE-C1- 3 935 531
- US-A- 5 971 444

## Beschreibung

Die Erfindung betrifft eine Dichtvorrichtung für eine Abdichtung eines durch eine Begrenzungsfläche eines Bauwerks ragenden Rohres oder einer Leitung gegenüber dem Bauwerk.

Durch die Wände eines Bauwerks bzw. auch durch die Decken eines Bauwerks sind oftmals Rohrleitungen oder auch andere Leitungen, wie Stromkabel etc. zu führen. Hierbei stellt sich das Problem der Dichtheit.

Es ist bekannt, solche Durchführungen mittels Sonderelementen abzudichten, siehe beispielsweise die EP 0 309 836 A2.

Es ist ebenfalls bekannt, eine Wand eines Bauwerks, beispielsweise eine Kellerwand, außenseitig mit Bitumen einzustreichen und/oder eine Dichtbahn aufzuflämmen und ein in das Bauwerk geführtes Rohr gegenüber dieser Bitumenschicht mit einem Dichtmittel, z.B. ebenfalls mit Bitumen abzudichten, sodass ein Eindringen von Wasser bzw. Feuchtigkeit in das Innere des Bauwerks verhindert werden kann. Es hat sich jedoch gezeigt, dass gerade an diesen Stellen, an denen Rohre bzw. andere Leitungen Wände oder Decken eines Bauwerks durchdringen, oftmals Feuchtigkeit trotz sorgfältiger Abdichtung eindringt, was unter anderem auch darauf beruht, dass die Oberfläche des Rohres bzw. die Oberfläche der Leitung keinen hinreichend guten Kontakt mit dem Dichtmittel eingeht. Weiters können sich Schwierigkeiten der Dichtheit dadurch ergeben, dass die Rohrleitungen gegenüber der Wand des Bauwerks bzw. dessen Decken noch bewegt werden, und zwar in Achsrichtung, quer dazu oder um die Achsrichtung, und sei es nur geringfügig, wie z.B. beim Zuschütten der Kellerwand mit Steinen und Erde. Weiters ist es auch schwierig, schräg durch eine Wand geführte Rohrleitungen gegenüber der Wand zu dichten, da sich an einer Stelle zwischen Rohrleitung und der Wand ein spitzer Winkel ergibt, der schwieriger zugänglich ist.

Die Erfindung bezweckt die Vermeidung der oben geschilderten Nachteile und Schwierigkeiten und stellt sich die Aufgabe, eine Dichtvorrichtung der eingangs beschriebenen Art zu schaffen, mit der eine hundertprozentige Dichtheit zwischen einer Begrenzungsfläche eines Bauwerks und der durch diese Begrenzungsfläche geführten Rohrleitung bzw. Leitung erzielbar ist, wobei auch nachträgliche Bewegungen der Rohrleitung und auch extreme Schräglagen keine Schwierigkeiten bereiten. Weiters soll die Dichtheit in einfacher Weise und auch von ungelernten Arbeitern erzielt werden können.

Diese Aufgabe wird erfindungsgemäß durch die Kombination folgender Merkmale gelöst:
- eine an der Begrenzungsfläche aufgebrachte Dichtbahn,
- eine Muffe aus einem Material artgleich wie die Außenseite der Dichtbahn, geschaffen dazu, das Rohr bzw. die Leitung zu umgeben, mit mindestens einer gegen das Rohr gerichteten Dichteinheit, wie einer Dichtlippe, und mit einem konischen Außengewinde,
- einen mit der Muffe integral ausgebildeten Flansch,
- eine flexible, balgartige Verbindung zwischen Muffe und Flansch und
- einer auf das konische Außengewinde aufschraubbaren Mutter mit konischem Innengewinde, wobei
- der Flansch mit der artgleichen Seite der Dichtbahn untrennbar verbindbar ist.

Eine bevorzugte, besonders einfach anzubringende Dichtvorrichtung ist dadurch gekennzeichnet, dass
- die Dichtbahn an einer Seite ein Dichtmittel, wie Bitumen, und an der anderen Seite Kautschuk bzw. ein kautschukartiges Material, wie Ethylen-Propylen-Kautschuk, aufweist, welche Dichtbahn eine etwa zentrale Ausnehmung zur Durchführung des Rohres oder der Leitung aufweist und
- die Muffe aus Kautschuk bzw. aus kautschukartigem Material gebildet ist und
- der Flansch an der Seite, an der die Dichtbahn Kautschuk bzw. ein kautschukartiges Material aufweist, auf die Dichtbahn aufvulkanisiert ist.
Hierbei ist ein begrenzter Abschnitt der Dichtbahn vorteilhaft schon werksseitig mit dem Flansch verbunden, und es braucht an der Baustelle nur mehr die Dichtbahn auf die Bitumenschicht des Bauwerks aufgeklebt zu werden.

Eine andere bevorzugte Variante ist dadurch gekennzeichnet, dass
- die Dichtbahn an einer Seite eine Oberfläche gebildet von Weich-PVC aufweist und
- die Muffe ebenfalls aus Weich-PVC gebildet ist und
- der Flansch mit der Weich-PVC-Oberfläche der Dichtbahn verschweißbar oder verschweißt bzw. verklebbar oder verklebt ist.

Hierbei kann die Dichtbahn an der Baustelle mit dem Flansch untrennbar verbunden werden. Es ist jedoch auch möglich, nur einen Abschnitt der Dichtbahn mit vorbestimmter Größe mit dem Flansch werkseitig zu verbinden und diesen Abschnitt an der Baustelle mit einer dort vorgesehenen Dichtbahn zu verbinden.

Vorzugsweise sind mehrere Dichteinheiten, wie Dichtlippen, in Achsrichtung der Muffe hintereinanderliegend angeordnet, wodurch eine hohe Sicherheit gegen ein Eindringen von Grundwasser bzw. Schlagregen etc. auch dann erzielt wird, wenn die Oberfläche des Rohres bzw. der Leitung keinen optimalen Zustand aufweist.

Vorzugsweise ist (sind) die Dichtlippe(n) integral mit der Muffe ausgebildet.

Um einen großen Bewegungsspielraum der Muffe gegenüber dem Dichtflansch zu ermöglichen, ist vorteilhaft die balgartige Verbindung zwischen der Muffe und dem Flansch im Querschnitt U- oder S-förmig gestaltet.

Um einen guten Schutz der Muffe gegen von außen einwirkende Einflüsse sicherzustellen und um eine Anzeigemöglichkeit für ein hinreichend weites Einschrauben der Mutter auf die Muffe zu geben, ist vorteilhaft die Mutter stirnseitig mit einem radial nach innen gerichteten und die Muffe überdeckenden Flansch versehen, der vorzugsweise bei vollständig auf die Muffe aufgeschraubter Mutter an der Muffe zum Anschlag kommt.

Zur leichteren Handhabung ist vorteilhaft die Mutter außenseitig mit sich radial nach außen erstreckenden Greifleisten versehen.

Vorzugsweise ist die Mutter von festerer Konsistenz als die Muffe, sie ist zweckmäßig aus Kunststoff, insbesondere aus Polypropylen, gebildet.

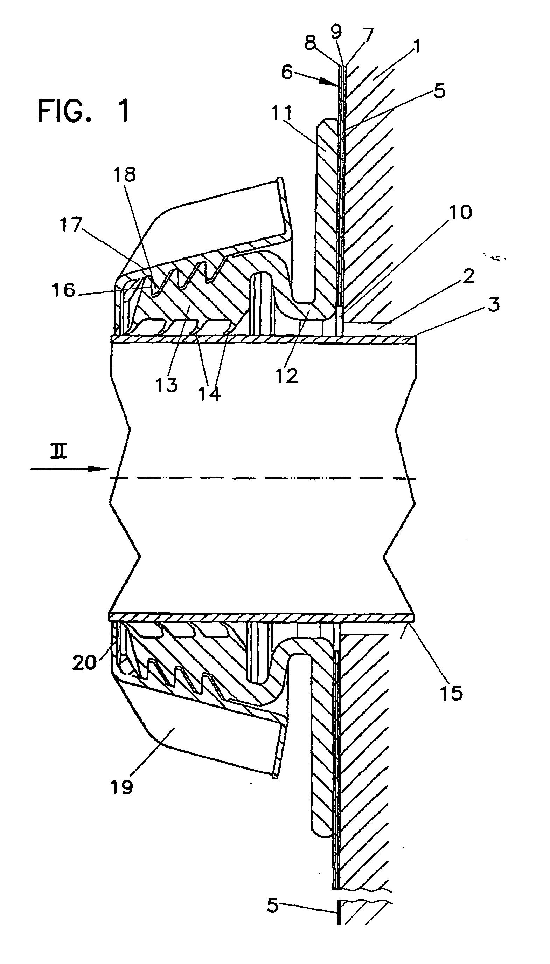

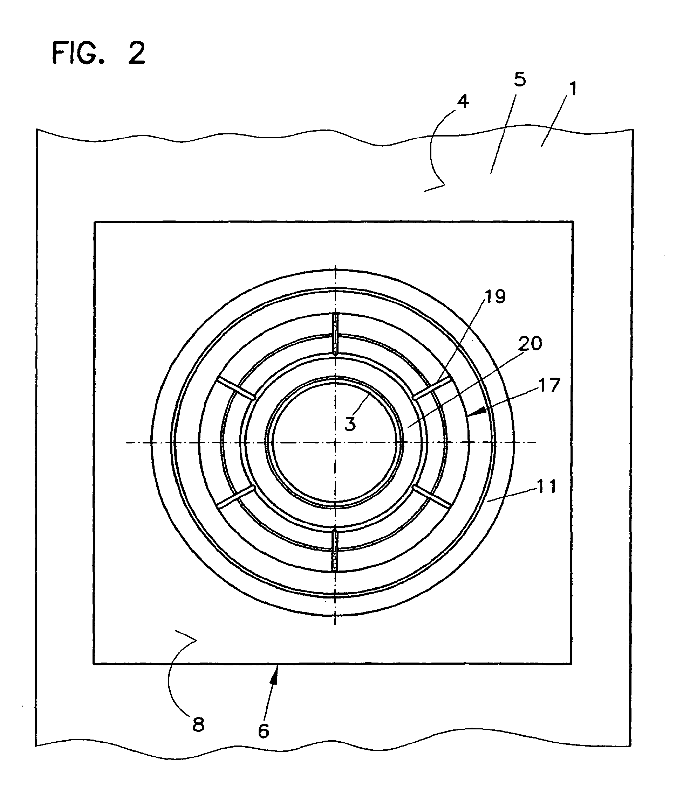

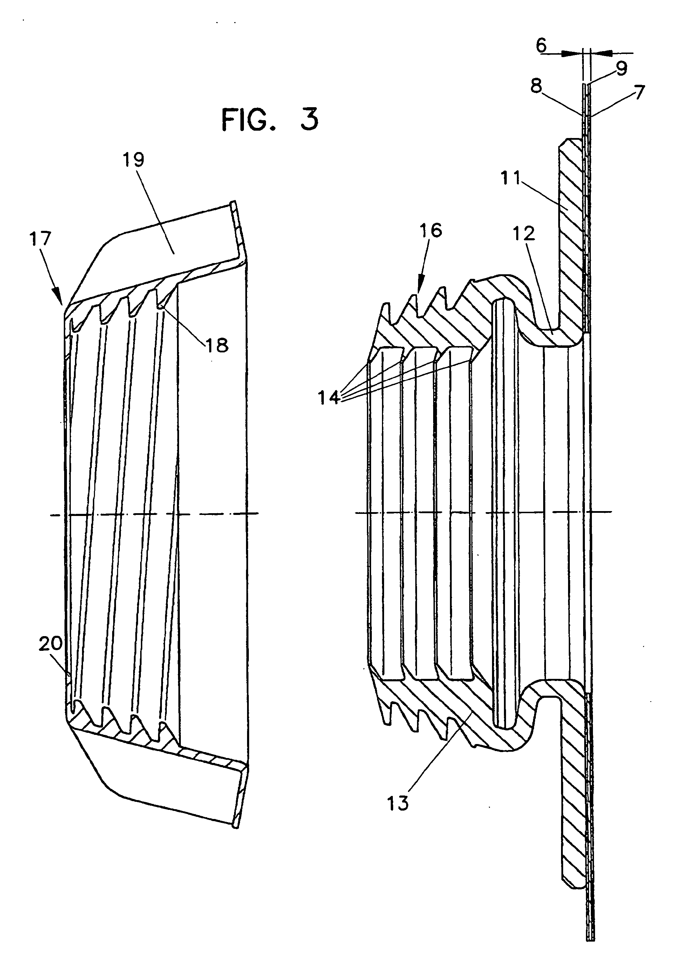

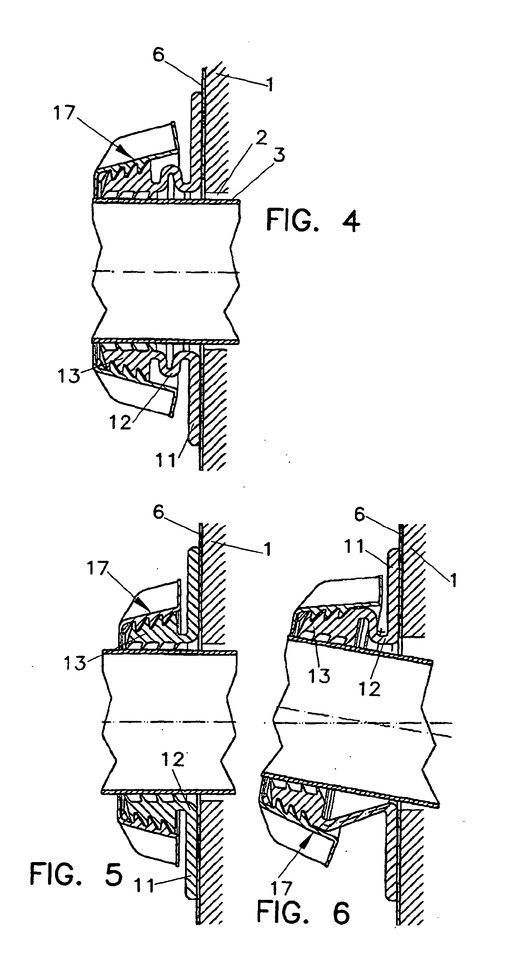

Die Erfindung ist nachfolgend anhand eines in der Zeichnung dargestellten Ausführungsbeispiels näher erläutert, wobei Fig. 1 einen Axialschnitt durch eine erfindungsgemäße Dichteinrichtung mit einer gegenüber einer Bauwerkswand abgedichteten Rohrleitung veranschaulicht. Fig. 2 stellt eine Draufsicht in Richtung des Pfeiles II der Fig. 1 in etwas verkleinertem Maßstab dar. Fig. 3 zeigt in Explosionsdarstellung die einzelnen Bauteile der Dichtvorrichtung. Die Fig. 4 und 5 veranschaulichen unterschiedliche Ausbildungen des balgartigen Teils zwischen dem Dichtflansch und der Muffe, Fig. 6 veranschaulicht ein in Schräglage durch eine Bauwerkswand geführtes Rohr und dessen Abdichtung.

In einer Wand 1 eines Bauwerks befindet sich eine von außen in das Innere des Bauwerks führende Öffnung 2, durch welche Öffnung 2 ein Rohr 3 bzw. eine Rohrleitung 3 von außen in das Innere des Bauwerks ragt. Die äußere Begrenzungsfläche 4 der Wand 1 des Bauwerks ist mit Bitumen 5 beschichtet.

Zur Abdichtung der Öffnung 2 bzw. der Rohrleitung 3 gegenüber der Wand 1 des Bauwerks ist an der Wand 1 außenseitig an der Bitumenschicht 5 eine die Öffnung 2 peripher umgebende Dichtbahn 6 angebracht, die an einer Seite von Bitumen 7 gebildet ist, und zwar an der Seite, die der Wand 1 zugewendet ist, und deren andere Seite von Ethylen-Propylen-Kautschuk 8 (EPM, EPDM) gebildet ist. Zwischen diesen Schichten 7 und 8 ist eine Klebe- oder Trägerschicht 9 vorhanden. Diese Dichtbahn 6 weist eine Öffnung 10 auf, durch die die Rohrleitung 3 ragt und die in etwa dem Durchmesser der Öffnung 2 der Wand 1 für die Rohrleitung 3 entspricht.

Auf die mit Kautschuk versehene Seite der Dichtbahn 6 ist ein die Rohrleitung 3 ringförmig umgebender Flansch 11 aufvulkanisiert, der über einen Balgabschnitt 12 in eine die Rohrleitung 3 umgebende Muffe 13 übergeht. Wie aus Fig. 2 zu erkennen ist, weist die Dichtbahn eine Größe auf, die die Fläche des Flansches 11 überschreitet und eine hinreichend gute Verklebung mit der an der Wand vorgesehenen Bitumenschicht 5 ermöglicht.

Die Muffe 13 weist innenseitig Dichteinheiten 14 auf, die als Dichtlippen ausgebildet sind und die, wie später noch beschrieben wird, gegen die Außenseite 15 der Rohrleitung 3 pressbar sind. Außenseitig ist die Muffe 13 mit einem konischen Gewinde 16 versehen.

Die Muffe 13, die Dichtlippen 14, der Balg 12 und der Flansch 11 sind integral aus Kautschuk oder einem kautschukartigen Material, wie Ethylen-Propylen-Kautschuk (EPDM, EPM), hergestellt.

Auf das konische Außengewinde 16 ist eine Mutter 17 mit einem zum konischen Außengewinde 16 korrespondierenden konischen Innengewinde 18 aufschraubbar. Diese Mutter 17 ist aus Kunststoff gefertigt, vorzugsweise aus Polypropylen, und hat gegenüber der aus Kautschuk gefertigten Muffe 13 eine größere Festigkeit und gute Gleiteigenschaften. Zur leichteren Aufschraubbarkeit der Mutter 17 kann noch ein Gleitmittel auf das Außengewinde 16 der Muffe 13 aufgebracht werden, z.B. Federweiß, Seifenwasser etc. Die Mutter 17 weist radial nach außen abstehende Griffleisten 19 zum leichteren Hantieren auf.

Stirnseitig ist die Mutter 17 mit einem radial nach innen gerichteten und die Muffe 13 im eingeschraubten Zustand überdeckenden Flansch 20 versehen, der das Eindringen von Schmutz zu den Dichtlippen 14 der Muffe 13 verhindert. Dieser radial nach innen gerichtete Flansch 20 schützt die Muffe 13 bei Außenlage auch vor Witterungseinflüssen und UV-Strahlen, etc. Zusätzlich wirkt dieser Flansch 20 vorteilhaft auch als Endanschlag, wenn die Mutter 17 auf der Muffe 13 derart fest aufgeschraubt ist, dass die Dichtlippen 14 durch dieses Aufschrauben fest genug an der Außenseite 15 der Rohrleitung 3 zur Anlage gelangen.

Wie aus den Fig. 4 und 5 zu erkennen ist, kann der Balgabschnitt 12 zwischen der Muffe 13 und dem Dichtflansch 11 im Querschnitt S-förmig (oder mäanderformig), U-förmig oder auch nur äußerst kurz gestaltet sein. Grundsätzlich soll dieser Balgabschnitt 12 eine Schiefstellung der Rohrleitung 3 gegenüber der Wand 1 ermöglichen, und zwar auch eine nachträgliche leichte Bewegung ermöglichen, ohne dass es zu einem Ablösen der Dichtbahn von der Wand 1 des Bauwerks kommt (siehe Fig. 6).

## Patentansprüche

1. Dichtvorrichtung für eine Abdichtung eines durch eine Begrenzungsfläche eines Bauwerks ragenden Rohres (3) oder einer Leitung gegenüber dem Bauwerk, die folgende Merkmale aufweist :
- eine an der Begrenzungsfläche aufzubringende Dichtbahn (6),
- eine Muffe (13) aus einem Material artgleich wie die Außenseite der Dichtbahn (6), geschaffen dazu, das Rohr bzw. die Leitung zu umgeben, mit mindestens einer gegen das Rohr (3) gerichteten Dichteinheit (14), wie einer Dichtlippe, und mit einem konischen Außengewinde (16),
- einen mit der Muffe (13) integral ausgebildeten Flansch (11),
- eine flexible, balgartige Verbindung (12) zwischen Muffe (13) und Flansch (11) und
- einer auf das konische Außengewinde (16) aufschraubbaren Mutter (17) mit konischem Innengewinde (18), wobei
- der Flansch (11) mit der artgleichen Seite der Dichtbahn (6) untrennbar verbindbar ist.

2. Dichtvorrichtung nach Anspruch 1, **dadurch gekennzeichnet, dass**
- die Dichtbahn (6) an einer Seite ein Dichtmittel, wie Bitumen (7), und an der anderen Seite Kautschuk bzw. ein kautschukartiges Material (8), wie Ethylen-Propylen-Kautschuk, aufweist, welche Dichtbahn (6) eine etwa zentrale Ausnehmung (10) zur Durchführung des Rohres (3) oder der Leitung aufweist und
- die Muffe (13) aus Kautschuk bzw. aus kautschukartigem Material gebildet ist und
- der Flansch (11) an der Seite, an der die Dichtbahn (6) Kautschuk bzw. ein kautschukartiges Material (8) aufweist, auf die Dichtbahn (6) aufvulkanisiert ist.

3. Dichtvorrichtung nach Anspruch 1, **dadurch gekennzeichnet, dass**
- die Dichtbahn an einer Seite eine Oberfläche gebildet von Weich-PVC aufweist und
- die Muffe (13) ebenfalls aus Weich-PVC gebildet ist und
- der Flansch (11) mit der Weich-PVC-Oberfläche der Dichtbahn (6) verschweißbar oder verschweißt bzw. verklebbar oder verklebt ist.

4. Dichtvorrichtung nach Anspruch 1, **dadurch gekennzeichnet, dass** mehrere Dichteinheiten, wie Dichtlippen (14), in Achsrichtung (2 oder 3) der Muffe (13) hintereinanderliegend angeordnet sind.

5. Dichtvorrichtung nach einem oder mehreren der Ansprüche 1 bis 4, **dadurch gekennzeichnet, dass** die Dichtlippe(n) (14) integral mit der Muffe (13) ausgebildet ist (sind).

6. Dichtvorrichtung nach einem oder mehreren der Ansprüche 1 bis 5, **dadurch gekennzeichnet, dass** die balgartige Verbindung (12) zwischen Muffe (13) und Flansch (11) im Querschnitt U- oder S-förmig gestaltet ist.

7. Dichtvorrichtung nach einem oder mehreren der Ansprüche 1 bis 6, **dadurch gekennzeichnet, dass** die Mutter (17) stirnseitig mit einem radial nach innen gerichteten und die Muffe (13) überdeckenden Flansch (20) versehen ist, der vorzugsweise bei vollständig auf die Muffe (13) aufgeschraubter Mutter (17) an der Muffe (13) zum Anschlag kommt.

8. Dichtvorrichtung nach einem oder mehreren der Ansprüche 1 bis 7, **dadurch gekennzeichnet, dass** die Mutter (17) außenseitig mit sich radial nach außen erstreckenden Greifleisten (19) versehen ist.

9. Dichtvorrichtung nach einem oder mehreren der Ansprüche 1 bis 8, **dadurch gekennzeichnet, dass** die Mutter (17) aus Kunststoff, insbesondere aus Polypropylen, gebildet ist.

## Claims

1. A sealing device for the sealing of a pipe (3) extending through a boundary surface of a building or of a tube in regard to the building, having the following features:
- a sealing sheet (6) to be applied to the boundary surface,
- a sleeve (13) made of a material of the same type as that of the external surface of the sealing sheet (6), adapted to surround the tube or the pipe, respectively, having at least one sealing unit (14) oriented towards the tube (3), such as a sealing lip, and a conical external thread (16),
- a flange (11) formed integral with the sleeve (13),
- a flexible, bellow-type connection (12) between the sleeve (13) and the flange (11) and
- a screw-nut (17) that may be screwed onto the conical external thread (16) having a conical internal thread (18), wherein
- the flange (11) may be unreleasably connected with the side of the sealing sheet (6) being of the same type.

2. A sealing device according to claim 1, **characterized in that**
- the sealing sheet (6) has on one side a sealing means such as bitumen (7) and at the other side rubber or a rubber-like material (8), respectively, such as ethylene propylene rubber, which sealing sheet (6) has a central recess (10) for passing through the tube (3) or the pipe and
- the sleeve (13) is formed of rubber or a rubber-like material, respectively, and
- the flange (11) has been vulcanized onto the sealing sheet (6) on that side, where the sealing sheet (6) has rubber or a rubber-like material (8), respectively.

3. A sealing device according to claim 1, **characterized in that**
- the sealing sheet has on one side a surface formed of soft PVC and
- the sleeve (13) is also formed of soft PVC and
- the flange (11) may be or is, respectively, welded or adhered, respectively, to the surface of the sealing sheet (6) being formed of soft PVC.

4. A sealing device according to claim 1, **characterized in that** several sealing units such as sealing lips (14) are arranged in the axial direction (2 or 3) of the sleeve (13) one after the other.

5. A sealing device according to one or several of the claims 1 to 4, **characterized in that** the sealing lip(s) is (are) integrally formed with the sleeve (13).

6. A sealing device according to one or several of the claims 1 to 5, **characterized in that** the bellow-type connection (12) between the sleeve (13) and the flange (11) has a cross-section in the form of a U or S.

7. A sealing device according to one or several of the claims 1 to 6, **characterized in that** the screw-nut (17) is provided on its front face with a flange (20) oriented radially towards the inside and covering the sleeve (13), which preferably abuts the sleeve (13) if the screw-nut (17) is completely screwed onto the sleeve (13).

8. A sealing device according to one or several of the claims 1 to 7, **characterized in that** the screw-nut (17) is externally provided with finger rails (19) extending radially towards the outside.

9. A sealing device according to one or several of the claims 1 to 8, **characterized in that** the screw-nut (17) is formed of plastic material, in particular of polypropylene.

## Revendications

1. Dispositif d'étanchéité pour un étanchement d'un tube (3) ou d'une conduite qui se dresse à travers une surface de délimitation d'une construction, vis-à-vis de la construction, qui présente les caractéristiques suivantes :
- une nappe d'étanchéité (6) destinée à être appliquée sur la surface de délimitation,
- un manchon (13) d'un matériau du même type que la face extérieure de la nappe d'étanchéité (6), approprié à entourer le tube ou la conduite, avec au moins une unité d'étanchéité (14), comme une lèvre d'étanchéité, dirigée vers le tube (3), et avec un filetage extérieur conique (16),
- une bride (11) réalisée de manière intégrale avec le manchon (13),
- une liaison flexible (12) semblable à un soufflet entre le manchon (13) et la bride (11), et
- un écrou (17) avec taraudage intérieur conique (18) susceptible d'être vissé sur le filetage extérieur conique (16), et
- la bride (11) est reliée de façon inséparable avec la face extérieure de même type de la nappe d'étanchéité (6).

2. Dispositif d'étanchéité selon la revendication 1, **caractérisé en ce que**
- la nappe d'étanchéité (6) comprend sur un côté un agent d'étanchement, comme du bitume (7), et sur l'autre côté du caoutchouc ou un matériau semblable à du caoutchouc (8), comme du caoutchouc éthylène-propylène, ladite nappe d'étanchéité (6) présentant un évidement approximativement central (10) pour la traversée du tube (3) ou de la conduite, et
- le manchon (13) est formé en caoutchouc ou en un matériau semblable à du caoutchouc, et
- la bride (11) est appliquée par vulcanisation sur la nappe d'étanchéité (6) sur le côté auquel la nappe d'étanchéité (6) présente le caoutchouc ou un matériau semblable à du caoutchouc (8).

3. Dispositif d'étanchéité selon la revendication 1, **caractérisé en ce que**
- la nappe d'étanchéité présente sur un côté une surface formée de PVC mou et
- le manchon (13) est également réalisé en PVC mou, et
- la bride (11) est soudée ou susceptible d'être soudée, ou encore collée ou susceptible d'être collée avec la surface en PVC mou de la nappe d'étanchéité (6).

4. Dispositif d'étanchéité selon la revendication 1, **caractérisé en ce que** plusieurs unités d'étanchéité, comme des lèvres d'étanchéité (14), sont agencées les unes derrière les autres dans la direction axiale (2 ou 3) du manchon (13).

5. Dispositif d'étanchéité selon l'une ou plusieurs des revendications 1 à 4, **caractérisé en ce que** la/les lèvre(s) d'étanchéité (14) est/sont réalisée(s) de manière intégrale avec le manchon (13).

6. Dispositif d'étanchéité selon l'une ou plusieurs des revendications 1 à 5, **caractérisé en ce que** la liaison (12) semblable à un soufflet entre le manchon (13) et la bride (11) est conçue avec une section en forme de UouS.

7. Dispositif d'étanchéité selon l'une ou plusieurs des revendications 1 à 6, **caractérisé en ce que** l'écrou (17) est pourvu du côté frontal d'une bride (20) orientée radialement vers l'intérieur et coiffant le manchon (13) qui, lorsque l'écrou (17) est totalement vissé sur le manchon (13), vient de préférence en butée contre le manchon (13).

8. Dispositif d'étanchéité selon l'une ou plusieurs des revendications 1 à 7, **caractérisé en ce que** l'écrou (17) est pourvu du côté extérieur de barrettes d'agrippement (19) s'étendant radialement vers l'extérieur.

9. Dispositif d'étanchéité selon l'une ou plusieurs des revendications 1 à 8, **caractérisé en ce que** l'écrou (17) est formé en matière plastique, en particulier en polypropylène.
